Europäisches Patentamt

European Patent Office

Office européen des brevets

(19)

(11) Veröffentlichungsnummer : **0 144 788**
**B1**

(12) # EUROPÄISCHE PATENTSCHRIFT

(45) Veröffentlichungstag der Patentschrift :
30.09.87

(51) Int. Cl.⁴ : **F 16 H 39/50, F 04 B 49/00**

(21) Anmeldenummer : **84113473.7**

(22) Anmeldetag : **08.11.84**

---

(54) **Leistungs-Regelvorrichtung für einen hydrostatischen Antrieb mit Fördermengeneinstellung.**

---

(30) Priorität : **08.11.83 DE 3340332**

(43) Veröffentlichungstag der Anmeldung :
**19.06.85 Patentblatt 85/25**

(45) Bekanntmachung des Hinweises auf die Patenterteilung : **30.09.87 Patentblatt 87/40**

(84) Benannte Vertragsstaaten :
**DE FR GB IT SE**

(56) Entgegenhaltungen :
**DE-A- 3 227 452**
**DE-B- 2 038 968**
**FR-A- 1 326 673**
**FR-A- 2 103 965**
**FR-A- 2 240 660**
**FR-A- 2 264 991**
**US-A- 2 709 449**
**US-A- 3 854 847**

(73) Patentinhaber : **Hydromatik GmbH**
**Glockeraustrasse 2**
**D-7915 Elchingen 2 (DE)**

(72) Erfinder : **Mayr, Albert**
**Lärchenstrasse 22**
**D-7913 Senden (DE)**
Erfinder : **Stickel, Oskar**
**Friedhofstrasse 21/1**
**D-7907 Langenau (DE)**

(74) Vertreter : **Körber, Wolfhart, Dr. et al**
**Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10**
**D-8000 München 22 (DE)**

**Beschreibung**

Die Erfindung bezieht sich auf eine Leistungs-Regelvorrichtung für einen hydrostatischen Antrieb im offenen Kreislauf mit einer Stelleinrichtung für das Fördervolumen der Hydropumpe des Antriebs, bestehend aus einem von einem Stelldruck beaufschlagbaren Stellkolben, der sich gegen eine Wegmeßfeder abstützt, deren andere Seite auf den Steuerschieber eines Leistungsventiles wirkt, welches den auf den Stellkolben wirkenden Stelldruck steuert und bei welchem der Steuerschieber gegen die Kraft der Wegmeßfeder von dem Druck des Arbeitsmediums des Getriebes beaufschlagt ist, wobei im lastlosen Zustand der Hydropumpe der Steuerschieber durch den Förderdruck des Arbeitsmediums gegen die Wegmeßfeder in Schaltstellung « minimales Fördervolumen » vorgespannt ist.

Derartige Leistungs-Regelvorrichtungen sind allgemein bekannt. Für die gleichzeitige abhängige Regelung mehrerer Pumpen ist eine derartige Regelvorrichtung beispielsweise in der DE-AS 20 38 968 beschrieben. Eine solche Regelvorrichtung ist auch für die Regelung einer einzelnen Pumpe geeignet.

Normalerweise werden leistungs- oder druckgeregelte, verstellbare Hydropumpen durch Federsysteme oder durch die auf den Stellkolben der Stelleinrichtung wirkende Feder auf maximales Fördervolumen eingestellt gehalten. Mit steigendem Druck des durch die Hydropumpe geförderten Arbeitsmediums wird die Hydropumpe mittels eines geeigneten Regelsystems, beispielsweise einer Regelvorrichtung der vorstehend als bekannt·genannten Art, entsprechend der Regelcharakteristik der Vorrichtung auf kleineres Fördervolumen gestellt. Das bedeutet, daß auch dann, wenn die volle Fördermenge der Hydropumpe für den durch den hydrostatischen Antrieb angetriebenen Verbraucher nicht benötigt wird, die maximale Fördermenge von der Hydropumpe gefördert wird. So entstehen erhebliche Verluste durch nicht benötigtes Fördern der maximalen Fördermenge der Hydropumpe eines solchen hydrostatischen Antriebes.

Insbesondere bei durch derartige hydrostatische Antriebe angetriebene Bau- und Erdbewegungsmaschinen kommt es heute mehr denn je darauf an, daß die gestellten Forderungen mit dem geringsten Aufwand an Energie erfüllt werden. Die installierte Leistung muß kraftstoffsparend maximal genützt werden können.

Die nachstehend erläuterte Erfindung macht sich die Erkenntnis zunutze, daß bei hydrostatischen Antrieben im offenen Kreislauf, wie sie beispielsweise für Bagger, Krane oder andere Baumaschinen verwendet werden, der beidseitig jeweils mit Arbeitsmedium beaufschlagbare Arbeitskolben zur Hin- bzw. Herbewegung eines Verbrauchers bisher in beiden Bewegungsrichtungen hinsichtlich der vom hydrostatischen Antrieb bzw. dessen Hydropumpe aufgebrachter Leistung gleich behandelt wurden. Mit anderen Worten wird bisher von der Hydropumpe auch bei Rückbewegungen des oder der Verbraucher die volle Leistung aufgebracht, obwohl sie für diese Bewegungen nicht benötigt wird.

Der Erfindung liegt die Aufgabe zugrunde, eine Leistungs-Regelvorrichtung der eingangs genannten Art so mit einer Fördermengeneinstellung zu kombinieren, daß bei Her- bzw. Rückstellbewegungen eines von dem hydrostatischen Antrieb angetriebenen Verbrauchers keine Verlustleistung durch Förderung eines zu großen, nicht benötigten Fördervolumens aufgebracht wird.

Zur Lösung dieser Aufgabe ist eine Leistungs-Regelvorrichtung der eingangs genannten Art dadurch gekennzeichnet, daß dem Steuerschieber ein Steuerkolben zugeordnet ist, der gegen die Kraft der Wegmeßfeder an dem Steuerschieber durch eine Druckfeder in Anlage gehalten ist, und die Druckfeder überwindend den Steuerschieber in Richtung der Schaltstellung « minimale Fördermenge » der Hydropumpe hält, wobei der Steuerkolben eine erste Kolbenfläche aufweist, die gegen die Kraft der Druckfeder mit einem die Leistungsaufnahme eines von hydrostatischen Antrieb angetriebenen Verbrauchers bestimmenden, einstellbaren Steuerdruck beaufschlagbar ist, und der Steuerkolben eine zweite Kolbenfläche aufweist, die in Richtung der Kraft der Druckfeder mit einem Rückstelldruck beaufschlagbar ist, der einem vorgegebenen Arbeitsdruck bei einer Rückbewegung des Verbrauchers mit verminderter Leistungsaufnahme entspricht.

Im lastlosen Zustand der Hydropumpe den Steuerschieber des Leistungsventiles gegen die Wegmeßfeder in Schaltstellung « minimales Fördervolumen » vorzuspannen, ist an sich bekannt. Dieses Vorspannen des Steuerschiebers gegen die Kraft der Wegmeßfeder kann auf verschiedene Weise erfolgen, beispielsweise durch eine den Stellkolben der Stelleinrichtung in Richtung minimaler Fördermenge der Hydropumpe vorspannende Feder oder durch Ausführung des Stellkolbens als zweiseitig beaufschlagbarer Kolben mit unterschiedlichen Kolbenflächen, so daß durch einen der minimalen Fördermenge entsprechender Stelldruck auf die ·größere der beiden Kolbenflächen wirkt und den Stellkolben in Richtung minimaler Fördermenge hält.

Durch die erfindungsgemäß vorgeschlagene Zuordnung eines Steuerkolbens mit Druckfeder zum Steuerschieber des Leistungsventiles ist es auf einfache Weise möglich, zum einen die Hydropumpe in Abhängigkeit von dem einstellbaren Steuerdruck eines von dem hydrostatischen Antrieb angetriebenen Verbrauchers Volumen-zusteuern, das heißt hinsichtlich der Fördermenge einzustellen. Der einstellbare Steuerdruck des Verbrauchers wird dazu auf die erste Kolbenfläche des Steuerkolbens gegen die Druckfeder gegeben. Zum anderen ist die Möglichkeit geschaffen, den Förderstrom der Hydropumpe in Abhängigkeit vom Fülldruck für die Her- bzw. Rückbewegung am Hydromotor des hydrostatischen Antriebes zurückzustellen, so daß von der Hydropumpe bei einer Rückbewegung des Verbrauchers keine nicht benötigte Leistung aufgebracht wird. Dies geschieht dadurch, daß der Rückstelldruck auf die zweite Kolbenfläche des Steuerkolbens in Richtung der Kraft der Druckfeder gegeben wird. Der der Erfindung zugrundeliegende Gedanke besteht also darin, den Rückstelldruck als Meßgröße für die Fördermengeneinstellung bzw. Fördermengenrückstellung der Hydropumpe auszunutzen.

Ist der Hydromotor des hydrostatischen Antriebes als beidseitig jeweils mit Arbeitsmedium beaufschlagbare Arbeitskolben zur Hin- bzw. Herbewegung eines Verbrauchers ausgebildet, ist eine zweckmäßige Ausgestaltung der Erfindung dadurch gekennzeichnet, daß mit der Arbeitsdruckleitung zur Zuführung von Arbeitsmedien zum Arbeitskolben in Richtung einer Her- oder Rückbewegung des Verbrauchers ein Regelventil verbunden ist, welches in Abhängigkeit vom Arbeitsdruck in der Arbeitsdruckleitung zum Arbeitskolben in Richtung einer Hinbewegung des Verbrauchers öffnet und den Arbeitsdruck für die Rückbewegung des Verbrauchers als Rückstelldruck auf die zweite Kolbenfläche des Steuerkolbens gibt. Das den Rückstelldruck auf den Steuerkolben gebende Regelventil wird somit vom Arbeitsdruck des Arbeitsmediums für die Hinbewegung am Hydromotor gesteuert. Eine zweckmäßige Ausgestaltung ist dadurch gekennzeichnet, daß in der Arbeitsdruckleitung zum Arbeitskolben in Richtung einer Hinbewegung des Verbrauchers ein zum Arbeitskolben hin öffnendes Rückschlagventil mit dazu parallel liegender Drosselstelle angeordnet ist und die vor und nach der Drosselstelle auftretende Druckdifferenz beim Her- oder Rückbewegen des Arbeitskolbens als Schaltdruck für das Öffnen des Regelventils benutzt wird.

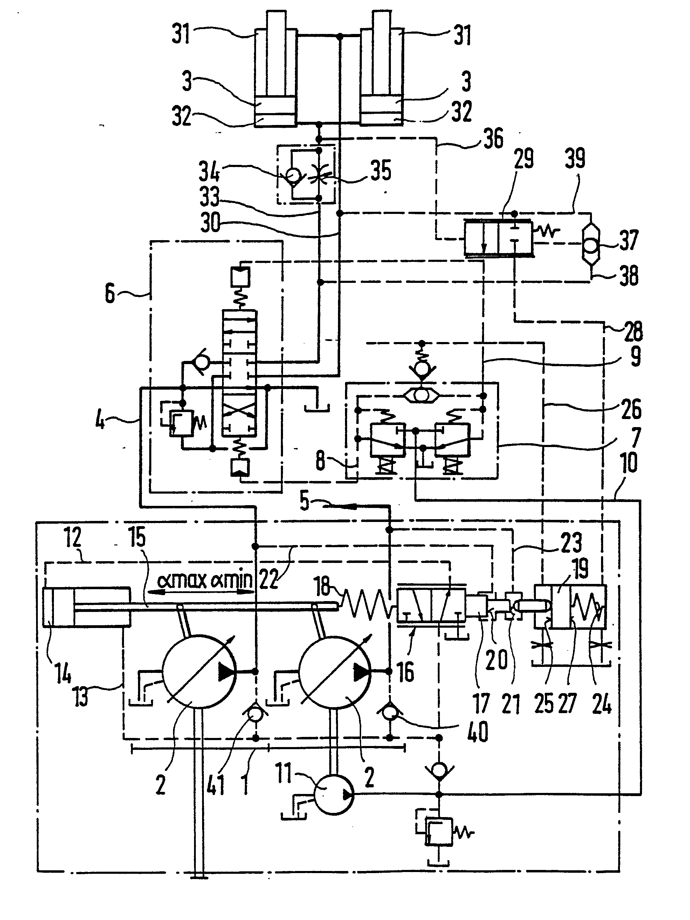

Eine beispielsweise Ausführungsform der Erfindung wird im folgenden anhand der beigefügten Zeichnungen näher beschrieben. Die einzige Figur zeigt schematisch einen hydrostatischen Antrieb mit Leistungs- und Fördermengenregelung.

Der hydrostatische Antrieb umfaßt zwei durch eine nicht dargestellte Antriebsmaschine über ein Getriebe 1 angetriebene Hydropumpen 2 (es können auch eine oder mehrere Pumpen vorgesehen sein) und einen aus zwei doppelseitig beaufschlagbaren Arbeitskolben 3 bestehenden Hydromotor (es kann auch nur ein oder auch mehrere Arbeitskolben vorgesehen sein). Die Hydropumpen 2 und die Arbeitskolben 3 sind in einem offenen Kreislauf über Arbeitsdruckleitungen 4 als hydrostatischer Antrieb verbunden, wobei bei der gezeigten Ausführungsform die rechte Hydropumpe 2 in eine andere, einen nicht dargestellten Verbraucher speisende Arbeitsdruckleitung 5 fördert. In der zu den Arbeitskolben 3 führenden Arbeitsdruckleitung 4 ist eine insgesamt mit 6 bezeichnete Regeleinrichtung bekannter Art angeordnet, welche hier nicht näher beschrieben wird, da bekannt und für die Erfindung nicht wesentlich. Die Regeleinrichtung 6 wird durch eine aus Wegeventilen 7 bestehende Gebereinrichtung 7 mit einem Steuerdruck in den Leitungen 8, 9 angesteuert, um in bekannter, für die Erfindung nicht wesentlicher Weise die Zufuhr von Arbeitsdruckmedium zu den Arbeitskolben 3 zu steuern und deren Bewegungsgeschwindigkeit und Richtung vorzugeben. Die Wegeventile in der Gebereinrichtung 7 werden zur einstellbaren Vorgabe der gewünschten Steuerdrücke für die einzelnen Verbraucher in bekannter Weise mit Steuerdruckmittel durch eine Leitung 10 versorgt, welche Steuerdruckmittel von einer von dem Getriebe 1 angetriebenen Hilfspumpe 11 liefert.

Die Stelleinrichtung für die Einstellung der Fördermenge der Hydropumpe bzw. Hydropumpen 2 mit druckabhängiger Leistungsregelung umfaßt einen zweiseitig über Steuerleitungen 12, 13 beaufschlagbaren Stellkolben 14, welcher mit den Stellhebeln für die Einstellung des Fördervolumens der Pumpen 2 über eine Stange 15 formschlüssig gekoppelt ist. Mit 16 ist ein Leistungsventil bezeichnet, dessen Steuerschieber 17 einerseits von einer Wegmessfeder 18 beaufschlagt ist, welche an der Stange 15 bzw. dem Stellkolben 14 zur Erfassung des Stellweges bzw. der Fördervolumeneinstellung der Pumpen dient. An dem Steuerschieber 17 des Leistungsventiles 16 liegt andererseits ein Steuerkolben 19 an. Auf der gleichen Seite des Steuerschiebers 17 sind Steuerflächen 20, 21 gebildet, welche über Leitungen 22, 23 mit den Arbeitsdruckleitungen 4, 5 verbunden sind. Der Steuerkolben ist gegen den Steuerschieber 17 durch eine Druckfeder 24 vorgespannt, welche die Kraft der Wegmessfeder 18 übersteigt und diese überdrücken kann. Der Steuerkolben 19 wiest eine erste Kolbenfläche 25 auf, die über eine Leitung 26 mit dem höchsten der einstellbaren Steuerdrücke an den Wegeventilen der Gebereinrichtung 7 beaufschlagbar ist und die gegen die Druckfeder 24 wirkt. Der Steuerkolben 19 weist eine zweite Kolbenfläche 27 in Richtung der Druckfeder 24 auf, welche über eine Druckleitung 28 mit einem Regelventil 29 verbunden ist. Das Regelventil 29 ist kein reines 2/2-Wege-Schaltventil, da auch Zwischenstellungen ansteuerbar sind. Es kann als regelbares 2/2-Wege-Schaltventil bezeichnet werden.

Das Regelventil 29 verbindet in seiner geöffneten Stellung die Druckleitung 28 mit der Arbeitsdruckleitung 30, welche zu den Zylinderräumen 31 der Arbeitskolben 3 führt, welche der kleineren Kolbenfläche der Arbeitskolben 3 für die Her- bzw. Rückbewegung des durch den oder die Arbeitskolben angetriebenen Verbrauchers zugeordnet sind. Die den größeren Kolbenflächen der Arbeitskolben 3 zugeordneten Zylinderräume 32 sind mit einer Arbeitsdruckleitung 33 verbunden, in welcher sich ein zu den Zylinderräumen 32 öffnendes Rückschlagventil 34 mit parallel liegender einstellbarer Drosselstelle 35 angeordnet ist. Der Schieber des Regelventiles 29 wird einerseits über eine Steuerleitung 36 mit der Arbeitsdruckleitung 33 für die Hinbewegung der Arbeitskolben 3 nach der Drosselstelle 35 verbunden und andererseits ist der Schieber des Regelventiles 29 über ein Wechselventil 37 und eine Steuerleitung 38 entweder mit der Arbeitsdruckleitung 33 oder über eine Leitung 39 mit der Arbeitsdruckleitung 30 für die Rückbewegung der Arbeitskolben 3 verbunden.

Der durch das Leistungsventil 16 in den zu den Zylinderräumen des Stellkolbens 14 führenden Steuerleitungen 12 und 13 einstellbare Stelldruck wird bei der gezeigten Ausführungsform über Rückschlagventile 40, 41 aus den Arbeitsdruckleitungen 4, 5 abgeleitet. Das Stelldruckmittel für die Einstellung des Stelldruckes könnte auch aus der von der Hilfspumpe 11 kommenden Leitung 10 abgezweigt sein. Es sei weiter darauf hingewiesen, daß die Funktion der Druckfeder 24 auch durch die Wirkung eines in den Zylinderraum vor der zweiten Kolbenfläche 27 aufgeschalteten Hilfsdruckes übernommen sein kann.

Die Funktion der vorbeschriebenen Regeleinrichtung ist folgende:

Bei Stillstand, das heißt nicht angetriebenen Hydropumpen 2 sind diese durch Verschiebung der Stange 15 in der Zeichnung nach links unter der Kraft der Feder 24 auf maximales Fördervolumen eingestellt, da auf den Stellkolben 14 keine Stelldrücke wirken. Werden die Hydropumpen 2 durch die nicht dargestellte Antriebsmaschine und das Getriebe 1 angetrieben, baut sich über die Arbeitdruckleitungen 4 bzw. 5 und die Rückschlagventile 40 bzw. 41 in den Steuerleitungen 12, 13 ein Stelldruck auf, welcher den Stellkolben 14 und damit die Stange 15 unter Zusammendrückung der Wegmeßfeder 18 nach rechts in der Zeichnung bewegt, da die Kolbenfläche auf der linken Seite des Stellkolbens 14 größer ist als auf der rechten Seite. Der Steuerschieber 17 des Leistungsventiles 16 bleibt in der gezeigten Stellung nach links, das heißt Umlauf des Stelldruckmittels in den Leitungen 12, 13. Die Druckfeder 24 hält den Steuerschieber 17 in der angegebenen linken Stellung gegen die Kraft der zusammengedrückten Wegmeßfeder 18. Beide Pumpen sind auf minimale Fördermenge zurückgestellt. Beim Zuschalten eines Verbrauchers (Arbeitskolben 3) an der Gebereinrichtung 7 wird der Stelldruck für das Zuschalten des Verbrauchers über die Leitung 26 auf den erste Kolbenfläche 25 des Steuerkolbens 19 gegeben. Dieser Stelldruck wirkt der Druckfeder 24 entgegen und schwächt deren Wirkung auf den Steuerschieber 17, so daß sich der Steuerschieber 17 in der Zeichnung nach rechts bewegen kann unter Freigabe des Stelldruckmittels in der Leitung 12 zum Ablauf, so daß durch Überwiegen des Stelldruckes in der Stelldruckleitung 13 der Stellkolben 14 in der Zeichnung nach links in Richtung größerer Fördermenge der Hydropumpen verstellt wird. Abhängig vom den Verbraucher ansteuernden Steuerdruck werden also die Hydropumpen fördermengengesteuert und auf Leistung gefahren.

Die Grenzleistungsregelung der Hydropumpen 2 erfolgt in bekannter Weise dadurch, daß der Arbeitsdruck in den Arbeitsdruckleitungen 4 und/ oder 5 über die jeweiligen Leitungen 22, 23 auf die Steuerflächen 20 und/oder 21 am Steuerschieber 17 wirkt und den Steuerschieber 17 gegen die Kraft der Wegmeßfeder 18 in die in der Figur linke Stellung bewegt, so daß sich ein Stelldruck in der Stelldruckleitung 12 aufbaut, welcher den Kolben 14 nach rechts in Richtung kleinerer Fördermenge der Pumpen bewegt. Die Wegmeßfeder 18 wirkt hier also als Leistungsmeßfeder. Diese Leistungsregelung hat Vorrang vor der vorstehend beschriebenen Fördervolumenregelung, da im Falle der einsetzenden Leistungsregelung der Steuerschieber 17 von dem Steuerkolben 19 abgehoben wird.

Wird durch Einstellung an der Gebereinrichtung 7 und entsprechender Einstellung an der Regeleinrichtung 6 der Verbraucher (Arbeitskolben 3) durch entsprechende Speisung der Arbeitsdruckleitung 30 mit Arbeitsdruckmittel auf Rückbewegung gestellt, wird für diese Rückbewegung aus praxisbezogener Erfahrung weniger Leistung von dem hydrostatischen Antrieb benötigt. Das Zurückdrücken erfolgt unter Abbau des Arbeitsdruckes in der Leitung 33. Dadurch wird das Regelventil 29 geöffnet und der Arbeitsdruck in der Arbeitsdruckleitung 30 für die Rückstellbewegung gelangt über die Leitung 28 in den Zylinderraum vor der zweiten Kolbenfläche 27 des Steuerkolbens 19. Die Kraft der Feder 24 wird unterstützt, der Steuerschieber 17 des Leistungsventiles 16 wird nach links bewegt, so daß die Hydropumpen 2 in Richtung kleinerer Fördermenge entsprechend der vorbeschriebenen Leistungsregelung verstellt werden. Es wird nur noch soviel Arbeitsmedium gefördert, daß der für die Rückbewegung erforderliche Druck in den Zylinderräumen 31 der Arbeitskolben 3 aufrechterhalten wird. Leistungsverluste durch das Fördern nicht benötigter Mengen von Arbeitsdruckmittel während des Rückstellvorganges sind vermieden.

**Patentansprüche**

1. Leistungs-Regelvorrichtung für einen hydrostatischen Antrieb im offenen Kreislauf mit einer Stelleinrichtung für das Fördervolumen der Hydropumpe (2) des Antriebs, bestehend aus einem von einem Stelldruck beaufschlagbaren Stellkolben (14), der sich gegen eine Wegmeßfeder (18) abstützt, deren andere Seite auf den Steuerschieber (17) eines Leistungsventiles (16) wirkt, welches den auf den Stellkolben wirkenden Stelldruck steuert und bei welchem der Steuerschieber gegen die Kraft der Wegmeßfeder von dem Druck (Leitung 22, 23) des Arbeitsmediums des Getriebes beaufschlagt ist, wobei im lastlosen Zustand der Hydropumpe (2) der Steuerschieber (17) durch den Förderdruck (Stelldruck 12) des Arbeitsmediums gegen die Wegmeßfeder (18) in Schaltstellung « minimales Fördervolumen » vorgespannt ist, dadurch gekennzeichnet, daß dem Steuerschieber (17) ein Steuerkolben (19) zugeordnet ist, der gegen die Kraft der Wegmeßfeder (18) an dem Steuerschieber (17) durch eine Druckfeder (24) in Anlage gehalten ist, und die Druckfeder (24) überwindend den Steuerschieber (17) in Richtung der Schaltstellung « minimale Fördermenge » der Hydropumpe (2) hält, wobei der Steuerkolben (19) eine erste Kolbenfläche (25) aufweist, die gegen die Kraft der Druckfeder (24) mit einem die Leistungsaufnahme eines von hydrostatischen Antrieb angetriebenen Verbrauchers bestimmenden, einstellbaren Steuerdruck (Leitung 26) beaufschlagbar ist, und der Steuerkolben (19) eine zweite Kolbenfläche (27) aufweist, die in Richtung der Kraft der Druckfeder (24) mit einem Rückstelldruck (Leitung 28) beaufschlagbar ist, der einem vorgegebenen Arbeitsdruck bei einer Rückbewegung des Verbrauchers mit verminderter Leistungsaufnahme entspricht.

2. Regelvorrichtung nach Anspruch 1 bei einem hydrostatischen Antrieb mit einem beidseitig jeweils mit Arbeitsmedien beaufschlagbaren Arbeitskolben (3) zur Hin- bzw. Herbewegung eines Verbrauchers, dadurch gekennzeichnet, daß mit der Arbeitsdruckleitung (30) zur Zuführung von Arbeitsmedien zum Arbeitskolben (3) in Richtung einer Her- oder Rückbewegung des Verbrauchers ein Regelventil (29) verbunden ist, welches in Abhängigkeit vom Arbeitsdruck in der Arbeitsdruckleitung (33) zum Arbeitskolben in Richtung einer Hinbewegung des Verbrauchers öffnet und den Arbeitsdruck für die Rückbewegung des Verbrauchers als Rückstelldruck auf die zweite Kolbenfläche (27) des Steuerkolbens (19) gibt.

3. Regelvorrichtung nach Anspruch 2, dadurch gekennzeichnet, daß in der Arbeitsdruckleitung (33) zum Arbeitskolben in Richtung einer Hinbewegung des Verbrauchers ein zum Arbeitskolben (3) hin öffnendes Rückschlagventil (34) mit dazu parallel liegender Drosselstelle (35) angeordnet ist und die vor und nach der Drosselstelle auftretende Druckdifferenz beim Her- oder Rückbewegen des Arbeitskolbens (3) als Schaltdruck für das Öffnen des Regelventiles (29) benutzt wird.

## Claims

1. Output control apparatus for a hydrostatic drive in open circuit having a device for regulating the delivery of the hydraulic pump (2) of the drive, consisting of a regulating piston (14) which can be acted upon by a regulating pressure and which butts against a path measuring spring (18), the other side of which acts on the spool (17) of an output valve (16) which controls the regulating pressure acting on the regulating piston and in which the spool is acted upon by the pressure (line 22, 23) of the working medium of the gearing against the force of the path measuring spring, with the hydraulic pump (2) not being under load, the spool (17) is pre-stressed against the path measuring spring (18) by means of the discharge pressure (regulating pressure 12) of the working medium in the « minimum delivery » switch position, characterized in that there is associated with the spool (17) a control piston (19) which is held against the force of the path measuring spring (18) in contact with the spool (17) by means of a pressure spring (24), and the pressure spring (24) holds and urges away the spool (17) in the direction of the « minimum delivery » switch position of the hydraulic pump (2), the control piston (19) having a first piston area (25) which is acted upon against the force of the pressure spring (24) by an adjustable control pressure (line 26) which determines the power consumption of a load which is driven by the hydrostatic drive, and the piston valve (19) having a second piston area (27) which can be acted upon in the direction of the force of the pressure spring (24) by a restoring pressure (line 28) which corresponds to a prescribed working pressure when there is a return movement of the load with reduced power consumption.

2. Control apparatus according to claim 1 for a hydrostatic drive having a working piston (3) which can be acted upon on both sides by working media for moving a load forward and back, characterized in that there is connected with the working pressure line (30) for the supply of working media to the working piston (3) in the direction of back of return movement of the load a pressure regulating valve (29) which opens as a function of the working pressure in the working pressure line (33) to the working piston in the direction of forward movement of the load and transmits the working pressure for the return movement of the load as restoring pressure to the second piston area (27) of the control piston (19).

3. Control apparatus according to claim 2, characterized in that there is arranged in the working pressure line (33) to the working piston in the direction of forward movement of the load a non-return valve (34) which opens towards the working piston (3) and which has a restricting point (35) in parallel therewith, and the pressure difference resulting before and after the restricting point during back or return movement of the working piston (3) is used as switching pressure in order for the pressure regulating valve (29) to open.

## Revendications

1. Dispositif de régulation de puissance d'une commande hydraulique en circuit ouvert, comportant un dispositif de régulation pour le débit de la pompe hydraulique (2) de la commande, constitué par un piston de régulation (14) pouvant être alimenté par une pression de régulation et s'appuyant contre un ressort capteur de course (18), dont l'autre côté agit sur le tiroir de commande (17) d'une vanne de puissance (16), qui commande la pression de régulation agissant sur le piston de régulation et sur laquelle le tiroir de commande est alimenté, contre l'action du ressort capteur de course, par la pression (conduites 22, 23) du fluide de service de l'engrenage, cependant que, dans la situation d'absence de charge de la pompe hydraulique (2), le tiroir de commande (17) est préchargé par la pression de refoulement (pression de régulation 12) du fluide de service, en position de commande « débit minimum », contre le ressort capteur de course (18) caractérisé en ce qu'au tiroir de commande (17), il est attribué un piston de commande (19), qui est maintenu contre l'action du ressort capteur de course (18), par un ressort de pression (24), en appui sur le tiroir de commande 17), et qui, en surmontant ce ressort de pression (24), maintient le tiroir de commande (17) dans le sens de la position de commande « débit minimum » de la pompe hydraulique (2), cependant que le piston de commande (19) présente une première face (25) de piston, qui peut être alimentée, contre l'action du ressort de pression (24), avec une pression de commande (conduite 26) réglable et déterminant la puissance absorbée par un appareil utilisateur entraîné par la commande hydraulique, et que le piston de commande (19) présente une deuxième face de piston (27), qui peut être alimentée, dans le sens de l'action du ressort de pression (24), avec une pression de rappel (conduite 28), correspondant à une pression de service fixée à l'avance pour un mouvement de recul de l'appareil utilisateur, avec une puissance absorbée réduite.

2. Dispositif de régulation suivant la revendication 1, pour une commande hydraulique comportant un vérin (3), pouvant être alimenté des deux côtés avec des fluides de service, pour un mouvement d'aller et/ou de retour d'un appareil utilisateur, caractérisé en ce qu'à la conduite (30), soumise à la pression de service, pour l'arrivée de fluides de service vers le vérin (3) dans le sens d'un mouvement d'aller et/ou de retour de l'appareil utilisateur, est raccordée une vanne de régulation (29), qui, en fonction de la pression régnant dans la conduite soumise à la pression de service (33) vers le vérin, s'ouvre dans le sens d'un mouvement aller de l'appareil utilisateur, et qui envoie la pression de service pour le mouvement de retour de l'appareil utilisateur, sous forme de pression de rappel, sur la deuxième face (27) du piston de commande (19).

3. Dispositif de régulation suivant la revendication 2, caractérisé en ce que, dans la conduite (33) soumise à la pression de service vers le vérin, se trouve, dans le sens d'un mouvement aller de l'appareil utilisateur, un clapet antiretour (34) s'ouvrant vers le piston (3), avec une surface d'étranglement (35) qui lui est parallèle et en ce que la différence de pression existant avant et après la surface d'étranglement est utilisée pendant le mouvement d'aller ou de retour du vérin (3) comme pression de commande pour ouvrir la vanne de régulation (29).

0 144 788